(19) Europäisches Patentamt
European Patent Office
Office européen des brevets

(11) EP 1 314 746 A2

(12) EUROPEAN PATENT APPLICATION

(43) Date of publication:
28.05.2003 Bulletin 2003/22

(51) Int Cl.[7]: **C08G 18/22**, C08G 18/18, C08G 18/38

(21) Application number: 03004410.1

(22) Date of filing: 20.10.1999

(84) Designated Contracting States:
AT BE CH CY DE DK ES FI FR GB GR IE IT LI LU MC NL PT SE

(30) Priority: 29.10.1998 US 182577
13.09.1999 US 395082

(62) Document number(s) of the earlier application(s) in accordance with Art. 76 EPC:
99949010.5 / 1 124 873

(71) Applicant: ESSILOR INTERNATIONAL COMPAGNIE GENERALE D'OPTIQUE
94227 Charenton cédex (FR)

(72) Inventors:
- Keita, Gabriel
Oldsmar, FL 34677 (US)
- Mcclimans, Pamela Anne
Safety Harbor, FL 34695 (US)
- Weber, Steve
Clearwater, FL 33762 (US)
- Turshani, Yassin
Largo, FL 33773 (US)

(74) Representative: Catherine, Alain et al
Cabinet Harlé & Phélip
7, rue de Madrid
75008 Paris (FR)

Remarks:
This application was filed on 27 - 02 - 2003 as a divisional application to the application mentioned under INID code 62.

# (54) Polymerizable compositions for making thio containing resins including a salt catalyst

(57) Polymerizable composition for making thio containing resins including a salt catalyst.

The composition comprises at least one episulfide compound and a catalyst comprising a salt of formula $M^{p+}_m Y^-_n$, wherein $M^{p+}$ is an alkaline metal, alkaline earth metal, a transition metal or ammonium group cation, $Y^-$ is an anion such as the pKa of the corresponding YH acid is $0.5 \leq pKa \leq 14$ with the proviso that when $M^{p+}$ is an ammonium group, the composition further comprises an electro-donor compound, p is the valency of the cation and n = m x p.

Application for making ophthalmic lenses.



Printed by Jouve, 75001 PARIS (FR)

## Description

## BACKGROUND OF THE INVENTION

### (1) FIELD OF THE INVENTION

The present invention relates to polymerizable compositions for making polymerized thio containing resins, and in particular fast curing compositions at room temperature.

The polymerizable compositions of the invention are particularly useful for making optical articles such as lenses, prisms, optical fibers, filters or for making different types of substrates, such as information recording substrates.

The polymerizable compositions of the invention are also specifically suited for making various coatings and in particular coatings for optical applications.

### (2) DESCRIPTION OF THE PRIOR ART

Plastic materials are widely used in the optical field and particularly in the ophthalmic field for their lightness, high impact resistance and tintable capability by immersion in a bath containing an organic dye.

Optically transparent plastic materials having a high refractive index $n_D$ = 1.6 or even higher have been developed recently which renders it possible to manufacture optical articles such as lenses of lower thickness for an equivalent corrective power (optical power).

A class of such materials is comprised of polythiourethane resins.

Polythiourethane resins for making optical lenses are described in US-A-4,775,733. In this document, the polythiourethane resins are polymerized from polymerizable compositions comprising a polyisocyanate and a polythiol in the presence of a polymerization catalyst. The catalysts are tin complexes such as dibutyl tin dilaurate and the polymerization is a thermal polymerization.

Document JP-02166158A discloses a process for making polyurethane resin moulding which comprises adding in polyether polyol a thiocyanate salt such as ammonium thiocyanate or sodium thiocyanate, a crosslinking agent, catalysts and other additives and thereafter mixing with denatured diphenylmethane diisocyanate, filling into a reactant tank and injecting into a mould with heating. The catalysts are comprised of a dipropyleneglycol solution of triethylamine and dibutylene tin dilaurate.

Another class of useful materials comprises the resins obtained by polymerization of a composition of polymerizable monomers including one or more polymerizable episulfide compounds.

Episulfide compounds and their polymerization are disclosed in EP-A-761 665 and EP-A-785 194.

FR 1.435.307 discloses the polymerization of monoepisulfide in the presence of a catalyst such as napthylsodium, phenylsodium, butyllithium, sodium methoxylate, anhydrous sodium sulfide, sodium hydroxide and sodium hydrosulfide and a chain tarnsfer agent. There is obtained a liquide polymers of low molecular weight. The obtained polyepisulfide polymer may be thereafter cross-linked by heating with a cross-linking agent such as a metal oxide or peroxide.

Unfortunately, the polymerization of these polymerizable compositions needs a long thermal cycle, generally between 8 hours to several days in order to obtain fully polymerized articles without striation or strain.

## SUMMARY OF THE INVENTION

Thus, the aim of the present invention is to provide polymerizable compositions for making thio containing resins which are thermally polymerizable and even polymerizable at room temperature in a short time cycle.

It has now been discovered that, by using an effective amount of a salt of a specific class of salts as part of the catalyst or preferably as the sole catalyst in polymerizable compositions for making thio containing resins, it was possible to use very short polymerization cycles while still obtaining a polymerized resin which is optically transparent and free of striations and having good mechanical, scratch and heat resistance properties.

According to the present invention, there is provided thermally or room temperature polymerizable compositions comprising:

A) at least one episulfide compound; and

B) as polymerization catalyst, an effective amount of at least one salt of formula:

$$M_m^P Y_n^-$$

wherein :

$M_m^{P+}$ is a cation selected from the group consisting of alkaline metals, alkaline earth metals, transitions metals and ammonium groups of formula $NR^+_4$ in which R is an alkyl radical,
$Y_n^-$ is an anion such as the corresponding acid YH has a pKa fulfilling the condition $0.5 \leq pKa \leq 14$ with the proviso that when $M_m^{P+}$ is an ammonium group, the polymerizable composition also comprises an electro-donor compound,
p is the valency of the cation, and
n = mxp.

Preferably, the catalyst consists solely in the salt or a mixture of these salts.

## DETAILED DESCRIPTION OF THE INVENTION AND PREFERRED EMBODIMENTS

The preferred metallic cation of the salts are $Li^+$, $Na^+$, $K^+$, $Rb^+$, $Mg^{2+}$, $Ca^{2+}$, $Ba^{2+}$ and $Al^{3+}$. The particularly preferred metallic cations are $Li^+$, $Na^+$ and $K^+$ due to their absence of color and solubility in the composition. Transition metals are less preferred because the salts thereof lead to coloured compositions and therefore coloured polymerized resins.
The preferred $NR^+_4$ groups are those in which R is a $C_1$-$C_8$ alkyl radical and more preferably, a methyl, ethyl, propyl, butyl or hexyl radical.
The salt shall be used in the polymerizable composition in an effective amount, i. e. an amount sufficient to promote the thermal or room temperature polymerization of the composition.
Generally, the salt will be present in amounts ranging, based on the total weight of the polymerizable monomers, from 5 to 1000 parts per million (ppm), preferably 10 to 500 ppm and more preferably 40 to 100 ppm.
Preferably, $Y^-$ is an anion such as the corresponding acid YH which fulfills the condition $0.5 \leq pKa \leq 10$ and more preferably $0.5 \leq pKa \leq 8$.
Preferably, the anion $Y^-$ is selected from the group consisting of thiocyanate, carboxylate, thiocarboxylate, acetylacetonate, diketone, acetoacetic ester, malonic ester, cyanoacetic ester, ketonitrile and anion of formula $RS^-$ wherein R is a substituted or nonsubstituted alkyl group or phenyl group.
Preferably, the alkyl group is a $C_1$-$C_6$ alkyl group, such as methyl, ethyl and propyl.
The preferred anions $Y^-$ are $SCN^-$, acetylacetonate, acetate, thioacetate, formate and benzoate.
The preferred episulfide compounds for use in the compositions of the invention are those described in the above cited European patent applications EP-A-761 665 and 785 194. These episulfide compounds have two or more moieties of formula:

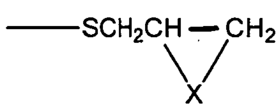

where X is S or O,
at least one of these moities being an episulfide group.

The polymerizable compositions of the invention may include up to 100% by weight of one or more of the episulfide compounds, or the polymerizable compositions may comprise one or more episulfide compounds, and one or more copolymerizable monomers.
Among the preferred copolymerizable monomers are the polythiol monomers described above.
The polythiol monomer may be any suitable polythiol having two or more, preferably two or three, thiol functions.
The polythiol monomers can be represented by formula:

$$R'(SH)_n, \qquad (VI)$$

in which n is an integer from 2 to 6 and preferably 2 to 3, and R' is an organic group of valency equal to n'.
Useful polythiol monomers are those disclosed in EP-A394 495 and US-A-4,775,733 and the polythiols corresponding to the following formulae:

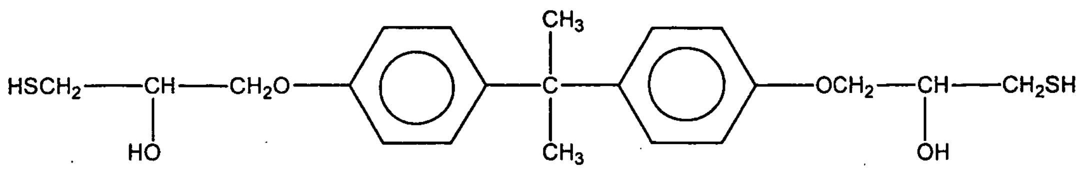

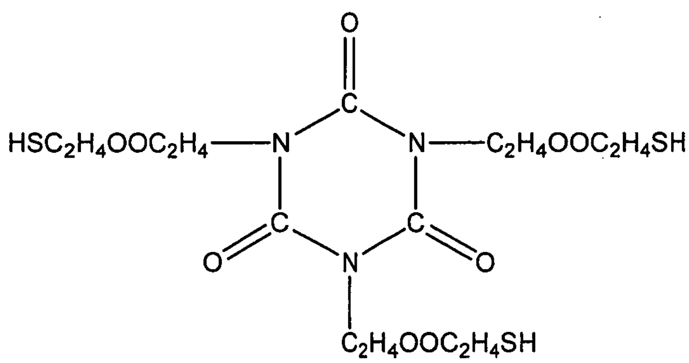

,

and

$$C_2H_5C(CH_2COOCH_2CH_2SH)_3$$

Among the preferred polythiol monomers there may be cited aliphatic polythiols such as pentaerythritol tetrakis mercaptoproprionate, 1-(l'mercaptoethylthio)-2,3-dimercaptopropane, 1-(2'-mercaptopropylthio)-2,(2'-mercaptopropylthio)-2, 3-dimercaptopropane, 1- (-3' mercaptopropylthio)-2,3 dimercaptopropane, 1- (-4' mercaptobutylthio)-2,3 dimercaptopropane, 1- (5' mercaptopentylthio)-2,3 dimercapto-propane, 1-(6'-mercaptohexylthio)-2,(6'-mercaptohexylthio)-2, 3-dimercaptopropane, 1,2-bis (-4'mercaptobutylthio)-3-mercaptopropane, 1,2-bis (-5'mercaptopentylthio)-3-mercaptopropane, 1,2-bis (-6'-mercaptohexyl)-3-mercaptopropane, 1,2,3-tris (mercaptomethylthio) propane, 1,2,3-tris (-3'mercaptopropylthio) propane, 1,2,3-tris (-2'-mercaptoethylthio) propane, 1,2,3-tris (-4'-mercaptobutylthio) propane, 1,2,3-tris (-6'-mercaptohexylthio) propane, methanedithiol, 1,2-ethanedithiol, 1,1 propanedithiol, 1,2-propanedithiol, 1,3-propanedithiol, 2,2propanedithiol, 1,6-hexanethiol-1,2,3-propanetrithiol, and 1,2-bis (-2'mercaptoethylthio)-3-mercaptopropane.

Polythiol monomers usually represent 30 to 70%, preferably 40 to 60% of the total weight of the polymerizable monomers present in the compositions.

In general, the molar ratio of NCO/SH ranges between 0.8 and 1.2.

The reactivity of the composition according to the invention increases with the cation size of the salt (K salts are more reactive than sodium salts which are more reactive than lithium salts).

The polymerizable compositions of the present invention preferably comprise a solvent for promoting the dissolution of the salt catalyst within the polythiol monomer.

Any polar organic solvent can be used such as acetonitrile, tetrahydrofurane or dioxane. However, to avoid bubble generation, it is preferred to use a reactive solvent containing a hydroxyl function and most preferably a hydroxyl containing solvent further including one double bond capable of reacting with the thiol functions and one hydrogen labile function capable of reacting with the iso (thio) cyanate functions. Suitable solvents are methanol, ethanol, acetone, acetonitrile and 3-methyl-2-butene-lol.

The amount of solvent is generally kept below 2% by weight, based on the total weight of the polymerizable monomers present, and preferably between 0 and 0.5% by weight, to avoid haze and bubbling.

In a preferred embodiment, and necessarily when compositions include an ammonium salt as catalyst, the

polymerizable compositions according to the present invention further include at least one electro-donor compound. The electro-donor compounds are preferably selected from the group consisting of acetonitrile compounds, amide compounds, sulfones, sulfoxides, trialkylphosphites, triarylphosphites, nitro compounds, ethyleneglycol ethers, crown ethers and kryptates.

Examples of acetonitrile compounds are NC-CH2-CN and

in which

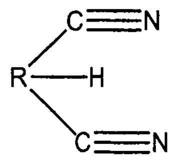

R is an alkyl group, preferably a $C_1$-$C_6$ alkyl group such as methyl, ethyl, propyl, butyl.

The amide compounds may be primary, secondary or tertiary amide compounds.

The trialkylphosphites and triarylphosphites may be represented by formula:

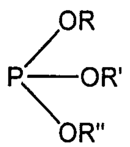

in which R, R', R'''are either an alkyl group, preferably a $C_1$-$C_6$ alkyl group or an aryl group such as a phenyl group. Preferred are trialkylphosphites, for example $(C_2H_50)_3P$.

Electro-donor compounds may also be selected from crown ethers and kryptates.

These cyclic molecules are usually chosen to exhibit a good compromise between the heteroatom or metal size and the"cage"size, i. e. between the number of heteroatoms and the size of the cycle.

The preferred crownethers and kryptates may be represented by the following formulae:

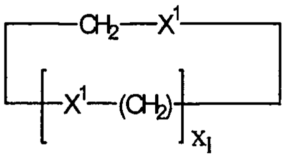

(VII)

,

and

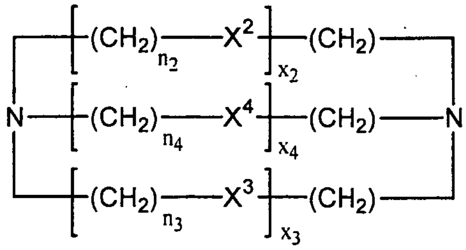

(VIII)

wherein :

$X^1$ represents O, S or NH, $x_1$ is an integer from 3 to 6, preferably from 3 to 4,

$X^2$, $X^3$ and $X^4$ represent O or S, $n_2$, $n_3$, $n_4$, $y_2$, $y_3$, $y_4$ are 2 or 3, and $x_2$, $x_3$, $x_4$, are 2 or 3.

Among the preferred crown ethers and kryptates there may be cited the following compounds:

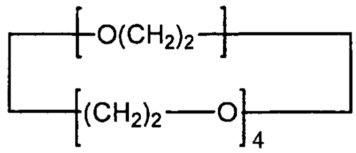

,

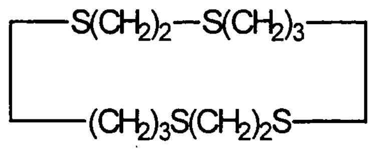

,

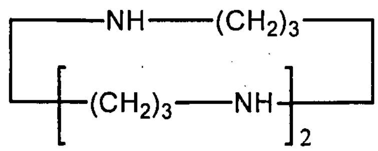

,

and

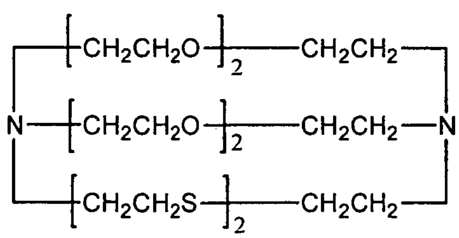

The electro-donor compounds are present, based on the total weight of the polymerizable monomers in amounts ranging from 0 to 5% by weight, preferably 0 to 1% by weight.

Preferred electro-donor compounds are crown-ethers, kryptates, trialkylphosphites and acetonitrile compounds.

Some acetonitrile compounds may be used both as solvent and electro-donor compound.

In general, electro-donor compounds stabilize the cation of the catalyst. They contribute to disociation of the anion/cation pair and thus increase the reactivity of the anion in the polymerization medium, and consequently the polymerization reaction.

These electro-donor compounds are especially effective when the polymerizable composition includes an episulfide (which has a relatively low reactivity) and lower reactive thiols such as:

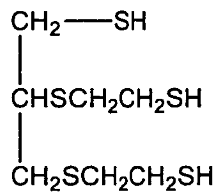

(MDO)

The polymerizable compositions according to the invention may also include additives which are conventionally employed in polymerizable compositions intended for moulding optical articles, in particular ophthalmic lenses, in conventional proportions, namely inhibitors, dyes, UV absorbers, perfumes, deodorants, antioxidants, antiyellowing agents and release agents.

The perfumes allow the odour of the compositions to be masked, in particular during surfacing or routering operations.

In particular, usual UV absorbers such as those commercialized under the tradenames UV 5411®, UV9®, Tinuvin400®, Tinuvin P® and Tinuvin 312® may be used in amounts generally up to 0.4% by weight of the total polymerizable monomers weight.

Also, the compositions of the invention preferably comprise a release agent in an amount up to 0.1 % by weight of the total polymerizable monomers weight.

Among the release agents there may be cited mono and dialkyl phosphates, silicones, fluorinated hydrocarbon, fatty acids and ammonium salts. The preferred release agents are mono and dialkyl phosphates and mixtures thereof. Such release agents are disclosed inter alia in document US-A-4,662,376, US-A-4,975,328 and EP-271839.

In a particularly preferred embodiment, polymerizable composition of the present invention is in the form of a two component polymerizable composition, i. e. a composition which is formulated as two separate components which are mixed together just before use.

In that preferred two component embodiment, the composition comprises a first separate component or premix which contains the episulfide compound, and optionally the UV absorber and the mold release agent, and a second separate component or premix which comprises the thiocyanate salt catalyst, a polythiol monomer, and optionally the solvent and the crown ether or kyptate.

The polymerisation of the composition according to the invention as described above may be achieved by the following process, which comprises

- preparing a first premix containing part or the totality of the episulfide compound, and optionally a UV absorber and a mold release agent,
- preparing a second premix containing the salt catalyst, the polythiol monomer, and optionally a solvent and an electro-donor compound (as shown in examples 2 to 13):
- mixing the first premix and the second premix at room temperature in appropriate quantities,
- filling a mold with the mixed quantities of first and a second premix and maintaining at room temperature until a hard gel is formed, and thereafter,
- curing the filled mold in an oven at an elevated temperature until complete polymerization; and
- removing the cast article from the mold.

The mixing, which can be a mechanical or ultrasonic mixing, is generally effected at room temperature for a duration ranging from 10 to 180 seconds.

Gel formation inside the mold is effected at room temperature.

Curing at elevated temperature in an oven, for example an air oven, is generally effected at a temperature ranging from 50 to 150°C preferably 100 to 130°C and lasts usually for 2 to 4 hours.

For example, the required amounts of premix 1 and premix 2 are filled inside two syringes. The syringe filing has been carried out with an electrical device or pneumatic device. By this way, the exact amounts of premixes 1 and 2 can be easily adjusted and fixed for precise delivery.

The two premixes are then added inside a small reactor chamber and then mixed by magnetic or mechanical stirrer for less than 2 minutes. However, time of mixing usually ranges from 10 to 180 seconds. Static mixers, small reactor with magnetic bar or mechanical mixers, or screw mixers may be used. A slight vacuum may be used for bubbles removal if necessary.

After mixing, the mixture is then dispensed from the reactor, using pressurized inert gas to fill the mold assembly. The mold assembly is conventional and consists of a two part mold in glass, metal or plastic, with a sealing gasket and a pressure clip to maintain sealing.

Before being exposed to the thermal cycle to achieve full polymerization, the filled mold assembly stays at room temperature until hard gel formation, generally less than 15 minutes.

Then gasket is removed and filled assembly is cured in air oven at 120 C for at least 2 hours.

A static mixer can be used instead of small reactor, however the striations are greater. By implementing the rotation of the static element, the mixing becomes very similar to a screw system and generally the result in terms of striation is very good.

Mixing by an ultrasonic system has also been used. In this case an adequate dosage (time intensity) resulting to a good compromise between kinetic acceleration, bubbles generation and mixing efficiency must be setup.

Thereafter the lenses can be tinted, coated to improve the scratch resistance, and an antireflective treatment can also be added.

The following examples illustrate the present invention. In these examples, unless otherwise stated, all parts and percentages are by weight.

The performances of compositions and lenses were evaluated by measuring the Gel time, i.e. the time needed by exothermic process to reach 50°C in a 50g sample. Time given in the tables is in minutes. The aspect was evaluated by visual observation.

## EXAMPLE 1

Bis (β-epithiopropyl) sulfide (100 parts by weight) is mixed with 600ppm of KSCN and 0.75 parts by weight of 15, crown, 5.

The polymerization proceeds at room temperature in 6 to 21 hours.

## EXAMPLES 2 TO 13

This examples show the episulfide polymerization of a composition disclosed in example 12 of EP-921 417 but using the polymerization catalysts of the present invention.

In a vial 90g of bis (β-epithiopropyl) sulfide is mixed with with 5g 2-hydroxy-3-phenoxypropyl acrylate at room temperature.

In another vial we add 5g of bis (ethanethiol)-2-2'-sulfide (DMDS) and the requested amount of salt catalyst is added with electro-donor compound and solvent as shown in Table 1.

The two premixes are mixed at room temperature and gel times were also recorded and are given in Table 6.

A thermal cycle of 3 hours at 100°C was then used to achieve the reaction.

Clear hard samples were obtained.

TABLE 1

| Example | | 2 | 3 | 4 | 5 | 6 | 7 | 8 | 9 | 10 | 11 | 12 | 13 |
|---|---|---|---|---|---|---|---|---|---|---|---|---|---|
| Bis(β-epithiopropyl)sulfide | g | 90 | 90 | 90 | 90 | 90 | 90 | 90 | 90 | 90 | 90 | 90 | 90 |
| 2-hydroxy-3-phenoxypropyl acrylate | g | 5 | 5 | 5 | 5 | 5 | 5 | 5 | 5 | 5 | 5 | 5 | 5 |
| Bis(ethanethiol,2,2')sulfide | g | 5 | 5 | 5 | 5 | 5 | 5 | 5 | 5 | 5 | 5 | 5 | 5 |
| Tetrahydrofurane | g | 0.1 | 0.1 | 0.1 | 0.1 | 0.1 | 0.1 | 0.1 | 0.1 | 0.1 | 0.1 | | |
| 15,5 crown ether | g | | | | | | | | | | | 0.1 | 0.1 |
| 2,2,2 kryptan | g | 0.20. | 0.40 | 0.30 | 0.30 | 0.20 | 0.30 | 0.40 | 0.40 | 0.30 | 0.20 | | |
| Potassium acetate | PPM | 399.04 | 497.76 | 498.26 | 498.26 | 498.75 | 548.05 | 597.25 | 597.25 | 297.85 | 598.44 | | |
| Tetrabutylamonium acetate | PPM | | | | | | | | | | | 208 | |
| Potassium thioacetate | PPM | | | | | | | | | | | | 20 |
| Gel time (min) | min | 57 | 23 | 38 | 43 | 42 | 33 | 21 | 21 | 33 | 38 | 180 | 180 |

Examples of pKa (acid/base) corresponding to the salt catalysts of the examples are given below :

TABLE 2

| ACID | ANION | pKa |
|---|---|---|
| HSCN | $SCN^{\ominus}$ | 0.85 |
| HCOOH | $HCOO^{\ominus}$ | 3.8 |
| $C_6H_5COOH$ | $C_6H_5COO^{\ominus}$ | 4.2 |
| $CH_3COOH$. | $CH_3COO^{\ominus}$ | 4.8 |
| $C_6H_5SH$ | $C_6H_5S^{\ominus}$ | 7.8 |
| $CH_3COCH_2COCH_3$ | $CH_3CO^{\ominus}CHCOCH_3$ | 9 |

## Claims

1. Polymerizable composition comprising at least one episulfide compound and, as polymerisation catalyst, an effective amount of at least one salt of formula:

$$M_m^{P+}Y_n^-$$

wherein

$M^{P+}$ is a cation selected from the group consisting of alkaline metals, alkaline earth metals, transitions metals and ammonium groups of formula $NR^+_4$ in which R is an alkyl radical,
$Y^-$ is an anion such as the corresponding acid YH has a pKa fulfilling the condition $0.5 \leq pKa \leq 14$ with proviso when $M^{P+}$ is an ammonium group, the polymerizable composition also comprises an electro-donor compound,
p is the valency of the cation, and
n = mxp.

2. Polymerizable composition according to claim 1, wherein the associated acid YH has a pKa fulfilling the condition $0.5 \leq pKa \leq 8$.

3. Polymerizable composition according to claim 1 or 2, wherein $Y^-$ is selected from the group consisting of thiocyanate, carboxylate, thiocarboxylate, $RS^-$ wherein R is a substituted or non-substituted alkyl group or phenyl group, acetylacetonate, diketone, acetoacetic ester, malonic ester, cynanoacetic ester, and ketonitrile.

4. Polymerizable composition according to anyone of claims 1 to 3, wherein the cation $M^{P+}$ is selected from the group consisting of $Li^+$, $Na^+$, $K^+$, $Rb^+$, $Mg^{2+}$, $Ca^{2+}$, $Ba^{2+}$ and $Al^{3+}$.

5. Polymerizable composition according to anyone of claims 1 to 3, wherein the cation $M^{P+}$ is an ammonium group $NR^+_4$, in which the alkyl radical R is a $C_1$-$C_8$ alkyl radical.

6. Polymerizable composition according to claim 5, wherein the alkyl radical R is selected from the group consisting of methyl, ethyl, propyl, butyl and hexyl radicals.

7. Polymerizable composition according to anyone of claims 1 to 6, wherein the at least one episulfide compound represents 100% by weight of the polymerizable monomers present in the composition.

8. Polymerizable composition according to anyone of claims 1 to 7, further comprising a polythiol monomer.

9. Polymerizable composition according to claim 8, wherein the polythiol monomer is selected from the group consisting of as pentaerythritol tetrakis mercaptoproprionate, 1- (1'mercaptoethylthio)-2,3-dimercaptopropane, 1-(2'-mercaptopropylthio)-2,(2'-mercaptopropylthio)-2, 3-dimercaptopropane, 1- (-3' mercaptopropylthio)-2,3 dimercaptopropane, 1- (-4' mercaptobutylthio)-2,3 dimercaptopropane, 1- (5' mercaptopentylthio)-2,3 dimercapto-propane, 1-(6'-mercaptohexylthio)-2,(6'-mercaptohexylthio)-2, 3-dimercaptopropane, 1,2-bis (-4'mercaptobutylthio)-3-mercaptopropane, 1,2-bis (-5'mercaptopentylthio)-3-mercaptopropane, 1,2-bis (-6'-mercaptohexyl)-3-mercaptopropane, 1,2,3-tris (mercaptomethylthio) propane, 1,2,3-tris (-3'mercaptopropylthio) propane, 1,2,3-tris (-2'-mercaptoethylthio) propane, 1,2,3-tris (-4'-mercaptobutylthio) propane, 1,2,3-tris (-6'-mercaptohexylthio) propane, methanedithiol, 1,2-ethanedithiol, 1,1 propanedithiol, 1,2-propanedithiol, 1,3-propanedithiol, 2,2propanedithiol, 1,6-hexanethiol-1,2,3-propanetrithiol, and 1,2-bis (-2'mercaptoethylthio)-3-mercaptopropane.

**10.** Polymerizable composition according to anyone of claims 1 to 9, further comprising a solvent.

**11.** Composition according to claim 10, wherein the solvent is a polar organic solvent.

**12.** Polymerizable composition according to claim 10, wherein the solvent is a reactive solvent containing one hydroxyl function, one double bond and one hydrogen labile function.

**13.** Composition according to anyone of claims 1 to 12, further comprising an electrodonor compound enhancing the reactivity of the polymerization reaction.

**14.** Composition according to claim 13, wherein the electrodonor commound is a crown ether.